# EUROPÄISCHE PATENTSCHRIFT

(11) **EP 3 665 874 B1**
(45) Veröffentlichungstag und Bekanntmachung des Hinweises auf die Patenterteilung: **02.03.2022**
(21) Anmeldenummer: 18749793.8
(22) Anmeldetag: 01.08.2018
(51) Int. Cl.: H04L 12/417

(54) **SENDE-/EMPFANGSEINRICHTUNG FÜR EIN BUSSYSTEM UND VERFAHREN ZUR REDUZIERUNG EINER SCHWINGNEIGUNG BEIM ÜBERGANG ZWISCHEN UNTERSCHIEDLICHEN BITZUSTÄNDEN**
TRANSCEIVER FOR A BUS SYSTEM, AND METHOD FOR REDUCING AN OSCILLATION INCLINATION UPON TRANSITIONING BETWEEN DIFFERENT BIT STATES
DISPOSITIF D'ÉMISSION/RÉCEPTION POUR SYSTEME DE BUS ET PROCÉDÉ DE RÉDUCTION DE LA TENDANCE À OSCILLER LORS DE LA TRANSITION ENTRE DIFFÉRENTS ÉTAT BINAIRES

(30) Priorität: 08.08.2017 DE 102017213837
(43) Veröffentlichungstag der Anmeldung: 17.06.2020
(73) Patentinhaber: Robert Bosch GmbH, 70442 Stuttgart (DE)
(72) Erfinder: PANNWITZ, Axel, 01445 Radebeul (DE); WALKER, Steffen, 72770 Reutlingen (DE); BRANDO, Cyrille, 72654 Neckartenzlingen (DE)
(86) Internationale Anmeldenummer: PCT/EP2018/070912
(87) Internationale Veröffentlichungsnummer: WO 2019/030083

(56) Entgegenhaltungen:
- DE-A1-102005 043 220
- DE-A1-102014 204 048
- DE-A1-102014 204 050
- DE-A1-102015 222 334

## Beschreibung

Die vorliegende Erfindung betrifft eine Sende-/Empfangseinrichtung für ein Bussystem und ein Verfahren zur Reduzierung einer Schwingneigung beim Übergang zwischen unterschiedlichen Bitzuständen, welche beispielsweise bei einer Teilnehmerstation für ein CAN-Bussystem zum Einsatz kommen können. Die Reduzierung der Schwingneigung wird mit Hilfe von R-C-Netzwerken erzielt.

### Stand der Technik

Bei einer Nachrichten- oder Datenübertragung in einem Bussystem werden Informationen, die in Bytes bzw. Bits der Nachrichten oder Daten enthalten sind, durch unterschiedliche Bitzustände oder Spannungszustände dargestellt. Die unterschiedlichen Bitzustände haben beim Übertragen der Nachricht über einen Bus des Bussystems unterschiedliche Buszustände zur Folge. Je nach Bussystem existieren für Nachrichten- oder Datenübertragung verschiedene Übertragungsprotokolle.

Beispielsweise werden beim CAN-Bussystem Nachrichten mittels des CAN- und/oder CAN FD Protokolls übertragen, wie es im Standard ISO-11898-1:2015 als CAN Protokoll-Spezifikation mit CAN FD beschrieben ist. Das CAN-Bussystem ist heute für die Kommunikation zwischen Sensoren und Steuergeräten weit verbreitet. Oft wird das CAN-Bussystem in Fahrzeugen oder Automatisierungsanlagen, usw. für eine Kommunikation zwischen den einzelnen Busteilnehmern eingesetzt.

Insbesondere bei der CAN/CAN-FD-Kommunikation müssen die Sende-/Empfangseinrichtungen, die auch Transceiver genannt werden, in der Lage sein, den Bus niederohmig treiben zu können, um einen dominanten Buszustand oder Bitzustand als einen der beiden verschiedenen Buszustände oder Bitzustände herzustellen. Im Rezessivzustand als dem anderen der beiden verschiedenen Buszustände dagegen sind die Sende-/Empfangseinrichtungen verhältnismäßig hochohmig.

Der Übergang von Dominant nach Rezessiv ist je nach Bustopologie, Länge der Stubs bzw. Stichleitungen, Position und Anzahl der Terminationswiderstände mit einer Schwingneigung behaftet. Dies ist sehr unvorteilhaft bei der Systemauslegung, weil infolgedessen die Bitzeit so lang sein muss, bis die Schwingung ausreichend bedämpft ist. Ist die Bitzeit nicht lang genug, kann die Sende-/Empfangseinrichtung im Rezessivzustand fälschlicherweise ein Dominant erkennen. Daher bedingt eine Einhaltung der maximal zulässigen Fehlerquote der Sende-/Empfangseinrichtung eine längere Bitzeit, was eine unerwünschte Reduzierung der Übertragungsrate oder Übertragungsgeschwindigkeit der Nachrichten im Bussystem zur Folge hat.

Die Offenlegungsschrift DE 10 2014 204 048 A1 offenbart eine Sende-/ Empfangseinrichtung mit einer Emissionssteuereinrichtung zur Steuerung der Eigenschaften der Sende-/Empfangseinrichtung zur Reduktion von leitungsgebundenen Emissionen, wobei die Sende-/Empfangseinrichtung zum Ein- oder Ausschalten der Emissionssteuereinrichtung abhängig von der Arbitrierungsphase und des Datenbereichs der Nachricht ausgestaltet ist.

### Offenbarung der Erfindung

Daher ist es Aufgabe der vorliegenden Erfindung, eine Sende-/Empfangseinrichtung für ein Bussystem und ein Verfahren zur Reduzierung einer Schwingneigung beim Übergang zwischen unterschiedlichen Bitzuständen bereitzustellen, welche die zuvor genannten Probleme lösen. Insbesondere sollen eine Sende-/Empfangseinrichtung für ein Bussystem und ein Verfahren zur Reduzierung einer Schwingneigung beim Übergang zwischen unterschiedlichen Bitzuständen oder Spannungszuständen, insbesondere einer Schwingneigung beim Übergang vom dominanten zum rezessiven Zustand, in einem Bussystem bereitgestellt werden.

Die Aufgabe wird durch eine Sende-/Empfangseinrichtung für ein Bussystem mit den Merkmalen von Anspruch 1 gelöst. Die Sende-/Empfangseinrichtung umfasst einen Sender zum Senden eines Sendesignals an eine erste Busader eines Busses des Bussystems, bei welchem Bussystem zumindest zeitweise ein exklusiver, kollisionsfreier Zugriff einer Teilnehmerstation auf den Bus des Bussystems gewährleistet ist, und zum Senden des Sendesignals an eine zweite Busader des Busses, und einer Schwingungsreduktionseinheit zur Dämpfung einer Schwingung des sich auf den Busadern einstellenden Bussignals bei Übergang des Sendesignals von einem dominanten Buszustand zu einem rezessiven Buszustand, wobei die Schwingungsreduktionseinheit eine Reihenschaltung aus einem ersten Kondensator und einem ersten Widerstand aufweist, die zwischen die erste Busader und einen Anschluss für Masse schaltbar sind, und/oder wobei die Schwingungsreduktionseinheit eine Reihenschaltung aus einem zweiten Kondensator und einem zweiten Widerstand aufweist, die zwischen die zweite Busader und einen Anschluss für Masse schaltbar sind.

Mit der beschriebenen Sende-/Empfangseinrichtung ist eine Dämpfung oder Reduzierung der Schwingdauer oder ein sogenanntes Ringing Suppression beim Übergang von Dominant nach Rezessiv möglich, woraus eine Erhöhung der Bitraten folgt, insbesondere im Datenbereich einer Nachricht. Als Folge davon steigt die Übertragungsrate oder Übertragungsgeschwindigkeit der Nachrichten im Bussystem.

Zudem erlaubt eine Dämpfung und damit Reduzierung der Schwingdauer beim Übergang zwischen unterschiedlichen Bitzuständen oder Spannungszuständen, insbesondere beim CAN-Bussystem von Dominant nach Rezessiv, mehr Freiheit bei der Auslegung von Bustopologien und/oder von Abschlüssen und/oder von Stubs und/oder von der Anzahl der Knoten bzw. Teilnehmerstationen des Bussystems.

Noch dazu wird durch die beschriebene Ausgestaltung der Sende-/Empfangseinrichtung eine vorteilhafte Veränderung des Spektrums bei leitungsgebundener Emission erzielt. Die Abstrahlung von Emissionen kann nämlich im kritischen Frequenzbereich verringert werden, der beispielsweise zwischen ca. ein und ca. drei MHz liegt, was der Resonanzfrequenz aus Gleichtaktdrossel und parasitären Kapazitäten entspricht. Stattdessen tritt durch die beschriebene Sende-/Empfangseinrichtung die Abstrahlung von Emissionen in dem unkritischen Frequenzbereich auf, der bei dem genannten Beispiel bei Frequenzen größer als ca. 10 MHz liegt, und bei dem die Drossel wirkt.

Darüber hinaus wird eine sehr symmetrische Impedanz der beiden Busadern des Busses durch das hinzugefügte R-C-Netzwerk geschaffen. Bei der beschriebenen Sende-/Empfangseinrichtung sind an jeder Busader nun die gleichen Elemente angeschlossen. Dadurch wird die Störfestigkeit und Emission der Sende-/Empfangseinrichtung und der Komponenten erhöht, die mit der Sende-/Empfangseinrichtung verbunden sind.

Die Sende-/Empfangseinrichtung ist für alle Kommunikationssysteme geeignet, bei welchen ein Buszustand aktiv getrieben wird, wie insbesondere bei einem CAN-Bussystem, einem CAN-HS-Bussystem, einem CAN-FD-Bussystem, usw. Bei einem CAN-HS-Bussystem (HS = Hochgeschwindigkeit = Highspeed) ist eine Datenübertragungsrate von bis zu 500 kBit pro Sekunde (500 kbps) möglich. Bei einem CAN FD-Bussystem ist eine Datenübertragungsrate von größer 1 MBit pro Sekunde (1Mbps) möglich.

Vorteilhafte weitere Ausgestaltungen der Sende-/Empfangseinrichtung sind in den abhängigen Ansprüchen beschrieben.

Gemäß einem Ausführungsbeispiel ist die Schwingungsreduktionseinheit zwischen einen Treiber, der das Sendesignal zu der ersten Busader treibt, und einen Anschluss für die erste Busader angeschlossen und die Schwingungsreduktionseinheit ist zwischen einen Treiber, der das Sendesignal zu der zweiten Busader treibt, und einen Anschluss für die zweite Busader angeschlossen.

In einer speziellen Ausgestaltung ist die Sende-/Empfangseinrichtung zum Senden und Empfangen von Nachrichten nach dem CAN FD Protokoll ausgestaltet. Zusätzlich oder alternativ hat der erste und zweite Kondensator jeweils einen Wert von etwa 50 pF und hat der erste und zweite Widerstand jeweils einen Wert von etwa 300 Ω.

Gemäß einem Ausführungsbeispiel hat ein Empfänger der Sende-/Empfangseinrichtung oder die Schwingungsreduktionseinheit zudem einen Kommunikationsphasen-Erfassungsblock zum Erfassen von unterschiedlichen Phasen einer Kommunikation auf dem Bus, und hat die Schwingungsreduktionseinheit mindestens eine Schalteinrichtung, welche ausgestaltet ist, die Reihenschaltung in Abhängigkeit von dem Erfassungsergebnis des Kommunikationsphasen-Erfassungsblocks mit der entsprechenden ersten und/oder zweiten Busader zu verbinden. Hierbei kann der Kommunikationsphasen-Erfassungsblock ausgestaltet sein, ein Endebit zu erfassen, welches das Ende einer Nachricht anzeigt, um die unterschiedlichen Phasen einer Kommunikation auf dem Bus zu erfassen. Zudem kann die Schwingungsreduktionseinheit ausgestaltet sein, die mindestens eine Schalteinrichtung nach Abschluss einer Arbitrationsphase der Kommunikation mit der ersten und/oder zweiten Busader zu verbinden.

Optional hat ein Empfänger der Sende-/Empfangseinrichtung oder die Schwingungsreduktionseinheit zudem einen Phasenlage-Erfassungsblock zum Erfassen der zeitlichen Lage der Signale auf den Busadern des Busses zueinander. Zusätzlich oder alternativ hat die Schwingungsreduktionseinheit mindestens eine Schalteinrichtung, welche ausgestaltet ist, die Reihenschaltung in Abhängigkeit von dem Erfassungsergebnis des Phasenlage-Erfassungsblocks mit der entsprechenden ersten und/oder zweiten Busader zu verbinden.

Möglicherweise ist die Schwingungsreduktionseinheit derart ausgestaltet, dass die Schwingungsreduktionseinheit nur aktiviert ist, wenn der Sender eine Nachricht auf den Bus sendet.

Die zuvor beschriebene Sende-/Empfangseinrichtung kann Teil eines Bussystems sein, das einen Bus, und mindestens zwei Teilnehmerstationen aufweist, welche über den Bus derart miteinander verbunden sind, dass sie miteinander kommunizieren können. Hierbei weist mindestens eine der mindestens zwei Teilnehmerstationen eine zuvor beschriebene Sende-/Empfangseinrichtung auf.

Von den mindestens zwei Teilnehmerstationen kann mindestens eine Teilnehmerstation eine Kommunikationssteuereinrichtung aufweisen, welche ausgestaltet ist, ein Signal an die Sende-/Empfangseinrichtung zu senden, welches die Sende-/Empfangseinrichtung als Grundlage für die Signale für die Busadern verwendet, und das Signal mit einem von der Sende-/Empfangseinrichtung vom Bus empfangenen Signal zur Erzeugung eines Steuersignals zu vergleichen, und wobei die Kommunikationssteuereinrichtung ausgestaltet ist, das Steuersignal zur Steuerung der Schwingungsreduktionseinheit an die Sende-/Empfangseinrichtung auszugeben.

Die zuvor genannte Aufgabe wird zudem durch ein Verfahren zur Reduzierung einer Schwingneigung beim Übergang zwischen unterschiedlichen Bitzuständen mit den Merkmalen von Anspruch 11 gelöst. Das Verfahren wird mit einer Sende-/Empfangseinrichtung für ein Bussystem ausgeführt, bei welchem zumindest zeitweise ein exklusiver, kollisionsfreier Zugriff einer Teilnehmerstation auf einen Bus des Bussystems gewährleistet ist, wobei das Verfahren die Schritte aufweist: Senden, mit einem Sender der Sende-/Empfangseinrichtung, eines Sendesignals an eine erste Busader eines Busses des Bussystems, bei welchem Bussystem zumindest zeitweise ein exklusiver, kollisionsfreier Zugriff einer Teilnehmerstation auf den Bus des Bussystems gewährleistet ist, Senden, mit dem Sender der Sende-/Empfangseinrichtung, des Sendesignals an eine zweite Busader des Busses, und Dämpfen, mit einer Schwingungsreduktionseinheit, einer Schwingung des sich auf den Busadern einstellenden Bussignals bei Übergang des Sendesignals von einem dominanten Buszustand zu einem rezessiven Buszustand, indem bei der Schwingungsreduktionseinheit eine Reihenschaltung aus einem ersten Kondensator und einem ersten Widerstand zwischen die erste Busader und einen Anschluss für Masse geschaltet ist, und/oder indem bei der Schwingungsreduktionseinheit eine Reihenschaltung aus einem zweiten Kondensator und einem zweiten Widerstand zwischen die zweite Busader und einen Anschluss für Masse geschaltet ist.

Das Verfahren bietet dieselben Vorteile, wie sie zuvor in Bezug auf die Sende-/Empfangseinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein elektrisches Schaltbild einer Sende-/Empfangseinrichtung des Bussystems gemäß dem ersten Ausführungsbeispiel;
Fig. 3A einen zeitlichen Verlauf eines Sendesignals TxD bei der Sende-/Empfangseinrichtung gemäß dem ersten Ausführungsbeispiel sowie Fig. 3B einen zeitlichen Verlauf eines Sendesignals TxD bei einer herkömmlichen Sende-/Empfangseinrichtung;
Fig. 4A einen zeitlichen Verlauf der Bussignale CAN_H und CAN_L bei der Sende-/Empfangseinrichtung gemäß dem ersten Ausführungsbeispiel sowie Fig. 4B einen zeitlichen Verlauf der Bussignale CAN_H und CAN_L bei der herkömmlichen Sende-/Empfangseinrichtung;
Fig. 5A einen zeitlichen Verlauf einer Differenzspannung VDIFF der Bussignale CAN_H und CAN_L bei der Sende-/Empfangseinrichtung gemäß dem ersten Ausführungsbeispiel sowie Fig. 5B einen zeitlichen Verlauf der Differenzspannung VDIFF der Bussignale CAN_H und CAN_L bei der herkömmlichen Sende-/Empfangseinrichtung;
Fig. 6A einen zeitlichen Verlauf einer Empfängerausgabe bei der Sende-/Empfangseinrichtung gemäß dem ersten Ausführungsbeispiel sowie Fig. 6B einen zeitlichen Verlauf einer Empfängerausgabe bei der herkömmlichen Sende-/Empfangseinrichtung;
Fig. 7A einen zeitlichen Verlauf eines Empfangssignals RxD bei der Sende-/Empfangseinrichtung gemäß dem ersten Ausführungsbeispiel sowie Fig. 7B einen zeitlichen Verlauf eines Empfangssignals RxD bei einer herkömmlichen Sende-/Empfangseinrichtung;
Fig. 8 ein elektrisches Schaltbild einer Sende-/Empfangseinrichtung eines Bussystems gemäß einem zweiten Ausführungsbeispiel;
Fig. 9 ein Schaubild zur Veranschaulichung des Aufbaus einer Nachricht, die von einer Teilnehmerstation des Bussystems gemäß dem zweiten Ausführungsbeispiel gesendet wird; und
Fig. 10 ein elektrisches Schaltbild einer Sende-/Empfangseinrichtung eines Bussystems gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

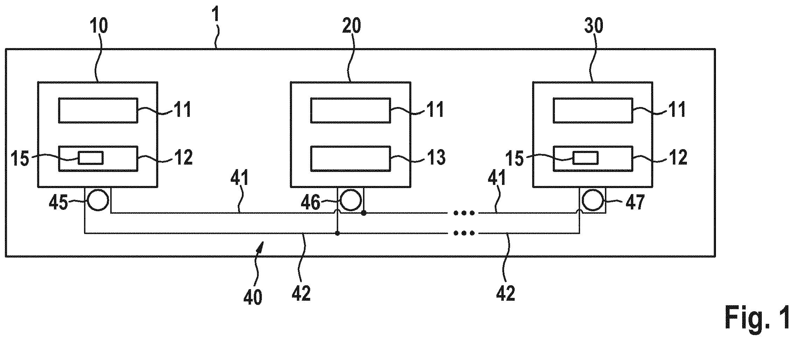

Fig. 1 zeigt ein Bussystem 1, das beispielsweise zumindest abschnittsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur elektrischen Signalübertragung nach Einkopplung der dominanten Pegel bzw. Erzeugung von rezessiven Pegeln für ein Signal im Sendezustand. Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11 und eine Sende-/Empfangseinrichtung 12. Die Sende-/Empfangseinrichtungen 12 umfassen jeweils eine Schwingungsreduktionseinheit 15. Die Teilnehmerstation 20 hat dagegen eine Kommunikationssteuereinrichtung 11 und eine Sende-/Empfangseinrichtung 13. Die Sende-/Empfangseinrichtungen 12 der Teilnehmerstationen 10, 30 und die Sende-/Empfangseinrichtung 13 der Teilnehmerstation 20 sind jeweils direkt an den Bus 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 20, 30 über den Bus 40 mit einer anderen Teilnehmerstation der an den Bus 40 angeschlossenen Teilnehmerstationen 10, 20, 30. Die Sende-/Empfangseinrichtung 12 dient zum Senden der Nachrichten 45, 47 in Form von Signalen und nutzt hierbei die Schwingungsreduktionseinheit 15, wie später noch ausführlicher beschrieben. Die Kommunikationssteuereinrichtung 11 kann insbesondere wie ein herkömmlicher CAN-FD-Controller und/oder CAN-Controller ausgeführt sein. Die Sende-/Empfangseinrichtung 13 kann insbesondere wie ein herkömmlicher CAN-Transceiver und/oder CAN-FD-Transceiver ausgeführt sein. Die Sende-/Empfangseinrichtung 13 kann insbesondere wie ein herkömmlicher CAN-Transceiver ausgeführt sein.

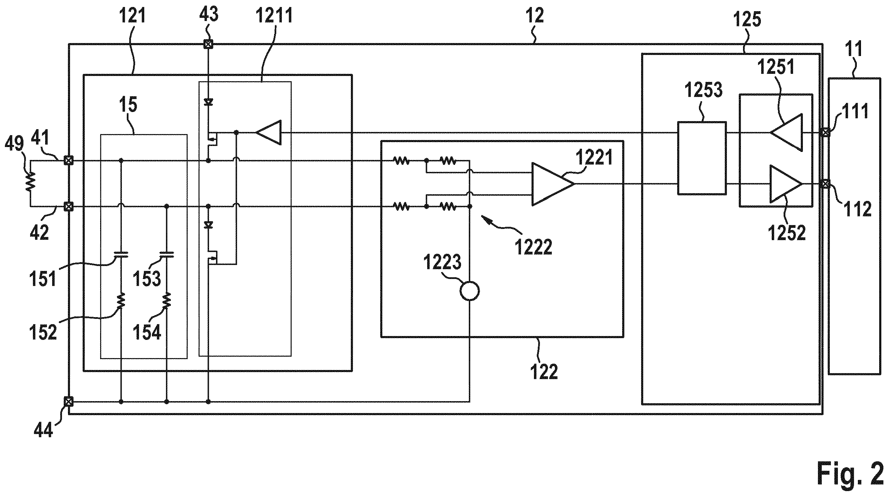

Fig. 2 zeigt den grundlegenden Aufbau der Sende-/Empfangseinrichtung 12 mit der Schwingungsreduktionseinheit 15. Die Sende-/Empfangseinrichtung 12 ist an den Bus 40, genauer gesagt dessen erste Busader 41 für CAN_H und dessen zweite Busader 42 für CAN_L angeschlossen. Die Spannungsversorgung, insbesondere CAN-Supply, für die erste und zweite Busader 41, 42 erfolgt über einen Anschluss 43. Der Anschluss an Masse bzw. CAN_GND ist über einen Anschluss 44 realisiert. Die erste und zweite Busader 41, 42 sind mit einem Abschlusswiderstand 49 terminiert.

Die erste und zweite Busader 41, 42 sind in der Sende-/Empfangseinrichtung 12 mit einem Sender 121, der auch als Transmitter bezeichnet wird, und mit einem Empfänger 122 verbunden, der auch als Receiver bezeichnet wird. Sowohl mit dem Sender 121 als auch dem Empfänger 122 ist eine Anschalteinheit 125 zum Treiben von Signalen über die Anschlüsse 111, 112 an die Kommunikationssteuereinrichtung 11 verbunden.

Zum Treiben der Signale der Anschlüsse 111, 112 hat die Anschalteinheit 125 einen Sendesignaltreiber 1251 für ein Sendesignal TxD, das auch als TxD-Signal bezeichnet wird und an dem Anschluss 111 von der Kommunikationssteuereinrichtung 11 empfangen wird. Zudem hat die Anschalteinheit 125 einen Empfangssignaltreiber 1252 für ein Empfangssignal RxD, das auch als RxD-Signal bezeichnet wird. Das Empfangssignal RxD wurde von den Busadern 41, 42 mittels des Empfängers 122 empfangen und wird über den Anschluss 112 an die Kommunikationssteuereinrichtung 11 weitergegeben. Die Treiber 1251, 1252 sind über ein Digitalteil 1253 mit dem Sender 121 und dem Empfänger 122 verbunden. Das Digitalteil 1253 kann eine Überwachung der Signale TxD, RxD durchführen.

Gemäß Fig. 2 hat der Sender 121 einen herkömmlichen Treiber 1211 für die Signale für die erste und zweite Busader 41, 42. Zudem ist in den Sender 121 die Schwingungsreduktionseinheit 15 eingebaut oder daran angeschlossen.

Der Empfänger 122 hat einen Empfangskomparator 1221, dessen Eingang in einem resistiven Spannungsteiler 1222, genauer gesagt dessen Mittelabgriff, verschaltet ist, und eine Busvorspannungseinheit 1223. Die Busvorspannungseinheit 1223 speist den resistiven Spannungsteiler 1222 an seinem einen Ende mit einer vorbestimmten Busvorspannung oder einem vorbestimmten Busvorspannungspotenzial. Der resistive Spannungsteiler 1222 ist an seinem anderen Ende an die erste und zweite Busader 41, 42 angeschlossen.

Die Schwingungsreduktionseinheit 15 umfasst ein R-C-Netzwerk für jede der Busadern 41, 42. Genauer umfasst die Schwingungsreduktionseinheit 15 für die erste Busader 41 einen Kondensator 151 und einen Widerstand 152, die in Reihe geschaltet sind. Außerdem umfasst die Schwingungsreduktionseinheit 15 für die zweite Busader 42 einen Kondensator 153 und einen Widerstand 154, die in Reihe geschaltet sind.

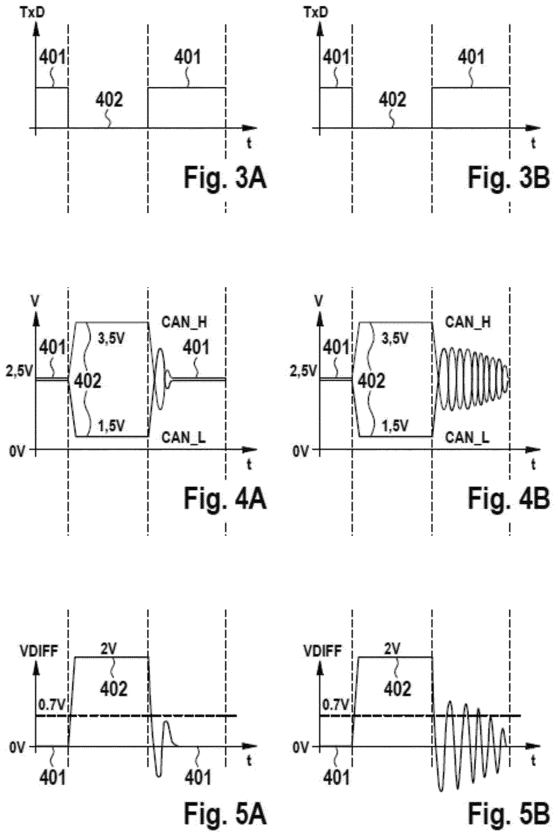

Der Kondensator 151 ist an seinem einen Ende an die erste Busader 41, also bei dem vorliegenden Ausführungsbeispiel an CAN_H angeschlossen. Der Widerstand 152 ist an seinem anderen Ende über den Anschluss 44 an Masse bzw. CAN_GND angeschlossen. Der Kondensator 151 mit seiner Kapazität C und der Widerstand 152 mit seinem Widerstandswert R bewirken eine Dämpfung der Schwingneigung der Signale gemäß Fig. 4A bis Fig. 7A, wie nachfolgend genauer ausgeführt.

Fig. 3A bis Fig. 7A zeigen jeweils einen zeitlichen Verlauf von Signalen bei der Sende-/Empfangseinrichtung 12 gemäß dem vorliegenden Ausführungsbeispiel. Hierbei stellen sich in Folge eines in Fig. 3A gezeigten Sendesignals TxD die Signale gemäß Fig. 4A bis Fig. 7A ein. Beispielsweise stellen sich die Signale gemäß Fig. 4A bis Fig. 7A ein, wenn für die Kondensatoren 151, 153 eine Kapazität C von in etwa 50 pF und für die Widerstände 152, 154 ein Widerstandswert R von in etwa 300 Ω angenommen wird. Es sind jedoch auch andere Werte für die Kondensatoren 151, 153 und die Widerstände 152, 154 denkbar.

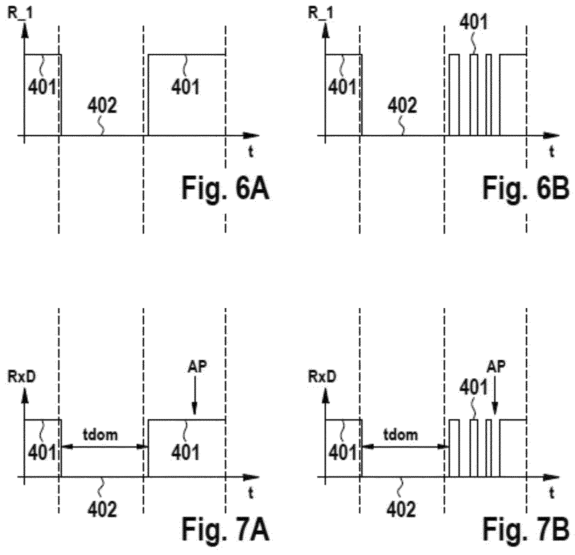

Bei dem Sendesignal TxD von Fig. 3A findet im Laufe der Zeit t bei drei aufeinanderfolgenden Bits ein Zustandswechsel von einem ersten Buszustand 401 zu einem zweiten Buszustand 402 und dann wieder zurück zu dem ersten Buszustand 401 statt. Der erste Buszustand 401 kann auch als Rezessivzustand oder hoher Pegel bezeichnet werden. Der zweite Buszustand 402 kann auch als Dominantzustand oder niedriger Pegel bezeichnet werden. In Folge des Sendesignals TxD von Fig. 3A stellt sich die Spannung V für die Signale CAN_H und CAN_L gemäß Fig. 4A ein, die Differenzspannung VDIFF = CAN_H - CAN_L gemäß Fig. 5A ein, ein Ausgangssignal R_1 des Empfängers 122 gemäß Fig. 6A ein, und ein Empfangssignal RxD gemäß Fig. 7A ein. Die Spannung V für die Signale CAN_H und CAN_L gemäß Fig. 4A entspricht im ersten Buszustand 401 oder rezessiven Zustand der Hälfte des Busvorspannungspotenzials der Busvorspannungseinheit 1223.

Im Vergleich dazu sind in den Fig. 3B bis Fig. 7B jeweils die zeitlichen Verläufe von Signalen bei einer Sende-/Empfangseinrichtung gemäß einer herkömmlichen Sende-/Empfangseinrichtung veranschaulicht, wie beispielsweise der Sende-/Empfangseinrichtung 13 der Teilnehmerstation 20.

Aus dem Vergleich der Signale von Fig. 4A und Fig. 4B ergibt sich sehr deutlich, dass die Sende-/Empfangseinrichtung 12 gemäß dem vorliegenden Ausführungsbeispiel bei demselben Sendesignal TxD ein deutlich schnelleres Einschwingen der Signale CAN-H und CAN_L nach dem Zustandswechsel von dem Zustand 401 auf den Zustand 402 bzw. von Dominant nach Rezessiv bewirkt. Ist die Schwellwertspannung des Empfängers 122 auf den üblichen Wert von 0,7 V eingestellt, wie in Fig. 5A und Fig. 5B veranschaulicht, erkennt der Empfänger 122 auch bei einem Zustandswechsel von dem Zustand 401 auf den Zustand 402 bzw. von Dominant nach Rezessiv keine angeblichen Zustandswechsel mehr von dem Zustand 402 auf den Zustand 401 bzw. von Rezessiv nach Dominant, wie auch in Fig. 6A dargestellt. Somit kann eine Abtastung des Empfangssignals RxD bei dem derzeit üblichen Abtastpunkt AP sicher zu dem gewünschten Ergebnis führen, wie in Fig. 7A dargestellt. Dies gilt, auch wenn sich die Länge der Bitzeit tdom des Zustands 401 bzw. eines dominanten Bits gegenüber einer herkömmlichen Sende-/Empfangseinrichtung oder der Sende-/Empfangseinrichtung 13 der Teilnehmerstation 20 etwas verlängert, wie aus dem Vergleich von Fig. 7A und Fig. 7B ersichtlich.

Somit hat die Sende-/Empfangseinrichtung 12 gemäß dem vorliegenden Ausführungsbeispiel eine geringere Schwingneigung als eine herkömmliche Sende-/Empfangseinrichtung bzw. die Sende-/Empfangseinrichtung 13.

Durch das beschriebene R-C-Netzwerk 151 bis 154 wird eine im Schwingkreis vorhandene Energie abgebaut.

Somit wird mit der Sende-/Empfangseinrichtung 12 ein Verfahren zur Reduzierung einer Schwingneigung beim Übergang zwischen unterschiedlichen Bitzuständen durchgeführt. Die Schwingung aufgrund eines Übergangs zwischen unterschiedlichen Bitzuständen wird mit der Schwingungsreduktionseinheit 15 deutlich gedämpft und somit reduziert.

Bei dem beschriebenen Ausführungsbeispiel haben nur die Teilnehmerstationen 10, 30 die Funktionalität der Sende-/Empfangseinrichtung 12. Die Teilnehmerstationen 10, 30 sind vorzugsweise Teilnehmerstationen oder Knoten mit hoher Schwingneigung. Die hohe Schwingneigung der Teilnehmerstationen 10, 30 kann sich insbesondere durch deren Position im Bussystem 1, die Position der Terminationswiderstände 49, die Stub-Länge bzw. Stichleitungslänge zu den Teilnehmerstationen 10, 30, usw. ergeben.

Gemäß einer Modifikation des ersten Ausführungsbeispiels ist es gemäß einem vereinfachten Ansatz auch möglich, nur eine Reihenschaltung aus Kondensator 151 und Widerstand 152 oder aus Kondensator 153 und Widerstand 154 für die Signale CAN_H oder CAN_L zu bedienen, um die Schwingungszeit nach dem Zustandswechsel von Dominant nach Rezessiv zu verkürzen. Dies bringt ebenfalls eine Verbesserung gegenüber einer herkömmlichen Sende-/Empfangseinrichtung oder der Sende-/Empfangseinrichtung 13 der Teilnehmerstation 20. In diesem Fall kann bei der Schaltung von Fig. 2 nur die Reihenschaltung aus Kondensator 151 und Widerstand 152 für das Signal CAN_H oder die Reihenschaltung aus Kondensator 153 und Widerstand 154 für das Signal CAN_L vorhanden sein, also für das Signal, das bedient werden soll.

Gemäß einer weiteren Modifikation des ersten Ausführungsbeispiels hat auch die Teilnehmerstation 20 anstelle einer Sende-/Empfangseinrichtung 13 eine Sende-/Empfangseinrichtung 12. In diesem Fall ist die zuvor beschriebene Funktionalität der Sende-/Empfangseinrichtung 12 für alle Teilnehmerstationen 10, 20, 30 des Bussystems aktiv, insbesondere je nach Bedarf.

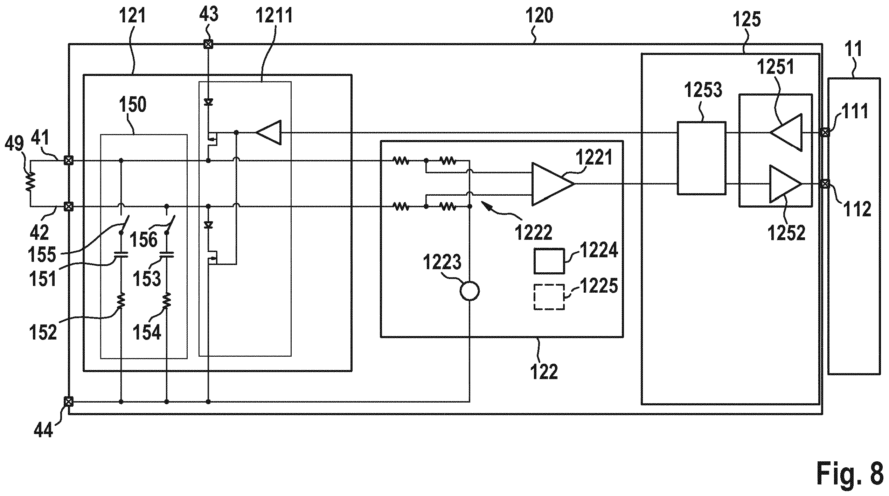

Fig. 8 zeigt den grundlegenden Aufbau einer Sende-/Empfangseinrichtung 120, die eine Schwingungsreduktionseinheit 150 aufweist. Das Bussystem 1 und die Sende-/Empfangseinrichtung 120 sind bis auf die nachfolgend beschriebenen Unterschiede auf die gleiche Weise aufgebaut, wie zuvor gemäß dem vorangehenden Ausführungsbeispiel oder seinen Modifikationen für das Bussystem 1 und die Sende-/Empfangseinrichtung 12 beschrieben.

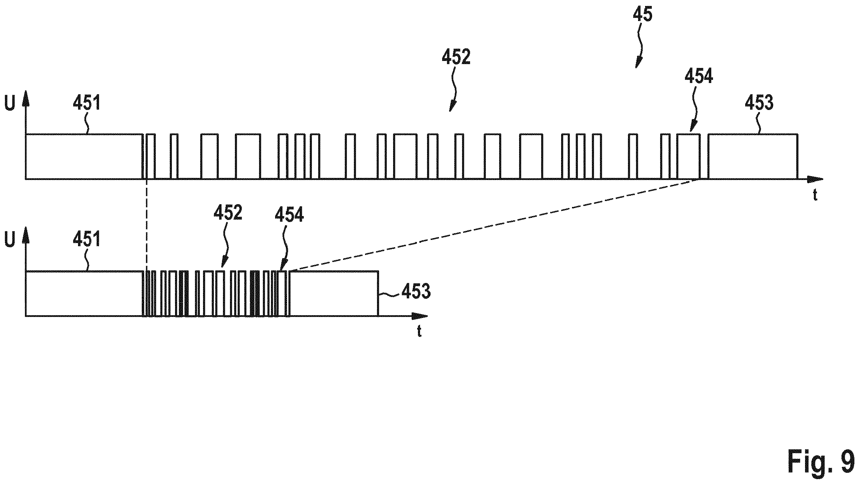

Die Schwingungsreduktionseinheit 150 hat zusätzlich Schalteinrichtungen 155, 156, welche abhängig von den unterschiedlichen Phasen einer Kommunikation auf dem Bus 40 das R-C-Netzwerk 151 bis 154 der Schwingungsreduktionseinheit 150 ein- oder ausschalten kann. Die Schalteinrichtungen 155, 156 sind einzeln oder auch gemeinsam schaltbar. Die unterschiedlichen Phasen einer Kommunikation können von einem nur schematisch veranschaulichten Kommunikationsphasen-Erfassungsblock 1224 erfasst und erkannt oder unterschieden werden, wie anhand von Fig. 9 genauer beschrieben. Der Kommunikationsphasen-Erfassungsblock 1224 ist möglicherweise Teil des Empfängers 122 und/oder Teil der Schwingungsreduktionseinheit 150.

Optional ist gemäß Fig. 8 zusätzlich oder alternativ ein ebenfalls nur schematisch veranschaulichter Phasenlage-Erfassungsblock 1225 vorgesehen, welcher die zeitliche Lage der beiden Signale auf den beiden Busadern 41, 42 zueinander bestimmt. Sind die beiden Signale auf den beiden Busadern 41, 42 gegenüber der Anordnung von Fig. 4A zeitlich verschoben zueinander, kann durch Ansteuern nur der Reihenschaltung aus Kondensator 151 und Widerstand 152 oder nur der Reihenschaltung aus Kondensator 153 und Widerstand 154 die Phasenlage der Signale auf den Busadern 41, 42 zumindest verbessert werden. Der Phasenlage-Erfassungsblock 1225 ist möglicherweise Teil des Empfängers 122 und/oder Teil der Schwingungsreduktionseinheit 150.

Bei der Steuerung der Schalteinrichtungen 155, 156 werden die Erfassungsergebnisse des Kommunikationsphasen-Erfassungsblocks 1224 und des gegebenenfalls vorhandenen Phasenlage-Erfassungsblocks 1225 zusammengefasst bzw. ausgewertet, um die Schalteinrichtungen 155, 156 anzusteuern. Die entsprechende Einrichtung hierfür kann beispielsweise bei den Schalteinrichtungen 155, 156 vorgesehen sein.

Der Kommunikationsphasen-Erfassungsblock 1224 kann beispielsweise einen Differenzverstärker aufweisen, dessen Eingänge parallel zu den Eingängen des Empfangskomparators 1221 geschaltet sind. Der Phasenlage-Erfassungsblock 1225 kann beispielsweise einen Differenzverstärker aufweisen, dessen Eingänge parallel zu den Eingängen des Empfangskomparators 1221 geschaltet sind. Zumindest einer der Ausgänge der Erfassungsblöcke 1224, 1225 ist zur Ansteuerung zumindest einer der Schalteinrichtungen 155, 156 heranziehbar. Die Schalteinrichtungen 155, 156 können beispielsweise als Feldeffekttransistoren mit isoliertem Gate ausgeführt sein, die auch als IGFET bezeichnet werden.

Fig. 9 zeigt in ihrem oberen Teil anhand der Nachricht 45 einen CAN-Rahmen, wie er von der Sende-/Empfangseinrichtung 12 oder der Sende-/Empfangseinrichtung 13 gesendet wird, und in ihrem unteren Teil einen CAN-FD-Rahmen, wie er von der Sende-/Empfangseinrichtung 12 gesendet werden kann. Der CAN-Rahmen und der CAN-FD-Rahmen sind für die CAN-Kommunikation auf dem Bus 40 grundlegend in zwei unterschiedliche Kommunikationsphasen unterteilt, nämlich die Arbitrationsphasen 451, 453 und einen Datenbereich 452, der bei CAN-HS auch Datenfeld bzw. bei CAN-FD auch Datenphase genannt wird. Der Datenbereich 452 ist an seinem Ende mit mindestens einem Endebit 454 abgeschlossen, das auch EOF-Bit genannt wird, wobei EOF für End of Frame bzw. Ende der Nachricht steht. Bei CAN oder CAN FD ist das EOF eine Bitabfolge aus 11 rezessiven Bits, also Bits mit dem zweiten Buszustand 402.

Bei CAN-FD wird im Vergleich zum klassischen CAN am Ende der Arbitrationsphase 451 die Bitrate für die folgende Datenphase auf z. B. 2, 4, 8Mbps erhöht. Damit gilt, dass bei CAN-FD die Bitrate in den Arbitrationsphasen 451, 453 kleiner als die Bitrate im Datenbereich 452 ist. Bei CAN-FD ist der Datenbereich 452 gegenüber dem Datenbereich 452 des CAN-Rahmens deutlich verkürzt.

Die Arbitrationsphasen 451, 453 sind ein wichtiger Bestandteil eines CAN-Rahmens und eines CAN-FD-Rahmens bzw. der Nachrichten 45, 46, 47, die in Fig. 1 gezeigt sind. Dabei wird entschieden, welcher Knoten bzw. welche Teilnehmerstation 10, 20, 30 des Bussystems 1 die wichtigste Nachricht 45, 46, 47 trägt. Die Teilnehmerstation 10, 20, 30 mit der wichtigsten Nachricht 45, 46, 47 gewinnt die Arbitration und darf daher die Nachricht nach Abschluss der Arbitrationsphase senden. Alle anderen Teilnehmerstationen sind dann beim Übertragen dieser wichtigsten Nachricht Zuhörer. Hierbei treiben die Sende-/Empfangseinrichtungen 12, 13 den Bus 40 niederohmig, um einen dominanten Buszustand 402 (Fig. 3A bis Fig. 7A) oder Bitzustand als einen der beiden verschiedenen Buszustände 401, 402 oder Bitzustände herzustellen. Im Rezessivzustand als dem anderen der beiden verschiedenen Buszustände 401, 402 dagegen sind die Sende-/Empfangseinrichtungen 12, 13 verhältnismäßig hochohmig.

Der Kommunikationsphasen-Erfassungsblock 1224 kann die Arbitrationsphasen 451, 453, den Datenbereich 452 sowie das Ende des Datenbereichs 453, also das Endebit (EOF) 454 erkennen. Dadurch kann die Funktionalität der Schwingungsreduktionseinheit 150 je nach Wunsch entweder für alle Kommunikationsphasen 451 bis 453 oder Phasen/Bereiche einer Nachricht 45 gelten oder nur bei abgeschlossener Arbitration, also für den Datenbereich 452. Letzteres ist sinnvoll, wenn ansonsten zu viele Teilnehmerstationen 10, 20, 30 gleichzeitig beim Arbitrieren die Funktion der Sende-/Empfangseinrichtung 120 aktivieren können und damit den effektiven Buswiderstand zu stark reduzieren.

Gemäß einer Modifikation des zweiten Ausführungsbeispiels ist die zuvor beschriebene Funktionalität der Sende-/Empfangseinrichtung 120 nur aktiv, wenn die Sende-/Empfangseinrichtung 120 selbst sendet bzw. als Sender agiert. In diesem Fall wäre die Auswertung des Sendesignals TxD von Vorteil, so dass das Sendesignal TxD vom Anschluss 111 zumindest einem Block der RS-Zeitsteuerungsblöcke 153, 154 zugeführt wird.

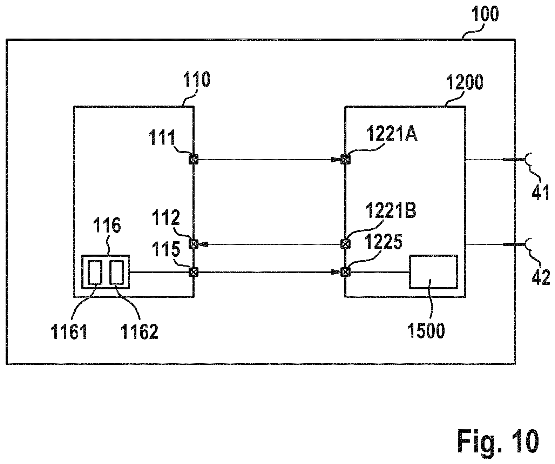

Fig. 10 zeigt den grundlegenden Aufbau einer Teilnehmerstation 100 mit einer Kommunikationssteuereinrichtung 110 und einer Sende-/Empfangseinrichtung 1200 gemäß einem dritten Ausführungsbeispiel. Das Bussystem 1 und die Teilnehmerstation 100 sind bis auf die nachfolgend beschriebenen Unterschiede auf die gleiche Weise aufgebaut, wie zuvor gemäß dem ersten Ausführungsbeispiel oder seinen Modifikationen für das Bussystem 1 und die Teilnehmerstation 10 beschrieben.

Die Kommunikationssteuereinrichtung 110 ist bis auf die nachfolgend beschriebenen Unterschiede aufgebaut wie die Kommunikationssteuereinrichtung 11 des ersten Ausführungsbeispiels. Die Sende-/Empfangseinrichtung 1200 ist bis auf die nachfolgend beschriebenen Unterschiede aufgebaut wie die Sende-/Empfangseinrichtung 12 des ersten Ausführungsbeispiels.

Die Kommunikationssteuereinrichtung 110 hat neben den Anschlüssen 111, 112 für die Signale TxD, RxD einen zusätzlichen Anschluss 115 für ein Steuersignal RS_Control_Out.

Die Sende-/Empfangseinrichtung 1200 hat einen Anschluss 1221A zum Empfang des Sendesignals TxD von dem Anschluss 111 der Kommunikationssteuereinrichtung 110, wie bereits zuvor in Bezug auf das erste Ausführungsbeispiel allgemeiner beschrieben. Außerdem hat die Sende-/Empfangseinrichtung 1200 einen Anschluss 1221B zum Senden des Empfangssignals RxD an den Anschluss 112 der Kommunikationssteuereinrichtung 110, wie bereits zuvor in Bezug auf das erste Ausführungsbeispiel allgemeiner beschrieben. Zusätzlich dazu weist die Sende-/Empfangseinrichtung 1200 einen Anschluss 1225 auf, an welchem das Steuersignal RS_Control_Out als Steuersignal RS_Control_ln empfangen wird.

Zur Erzeugung des Steuersignals RS_Control_Out für den Anschluss 115 hat die Kommunikationssteuereinrichtung 110 einen Steuerblock 116. Der Steuerblock 116 überwacht den Busverkehr auf den Busadern 41, 42, indem der Steuerblock 116 das als erste Informationen 1161 gespeicherte Sendesignal TxD und das am Anschluss 112 empfangene, und bei Bedarf zwischengespeicherte, Empfangssignal RxD miteinander vergleicht. Treten im rezessiven Buszustand, also dem ersten Buszustand 401, Abweichungen zwischen den beiden Signalen TxD, RxD auf, wie beispielsweise Zustandswechsel im Empfangssignal RxD, die nicht in dem Sendesignal TxD enthalten waren, so können daraus Rückschlüsse über das Netzwerk bzw. den Bus 40 und die Signalintegrität gezogen werden.

Des Weiteren liegen in dem Steuerblock 116 der Kommunikationssteuereinrichtung 110 zweite Informationen 1162 vor, wie Bitrate, Ausbreitungsverzögerung (Propagation-Delay) für beide Schaltvorgänge, also einem Zustandswechsel von dem ersten Buszustand 401 zu dem zweiten Buszustand 402. Die Informationen 1162 können alternativ in einem nicht dargestellten weiteren Block, insbesondere Speicher, vorgehalten werden.

Dabei kann der RxD-Ausgang am Anschluss 1221B anstelle eines Digitalsignals das Ausgangssignal eines Analog-Digital-Wandlers sein, welcher die Differenzspannung des Empfangssignals RxD darstellt.

Unter Berücksichtigung dieser Informationen 1161, 1162 erzeugt der Steuerblock 116 das Steuersignal RS_Control_Out, welches von dem Anschluss 115 ausgegeben wird, an dem Anschluss 1225 der Sende-/Empfangseinrichtung 1200 empfangen wird und an die Schwingungsreduktionseinheit 1500 weitergegeben wird. Dementsprechend können bei der Schwingungsreduktionseinheit 1500 die Blöcke 1224, 1225 des zweiten Ausführungsbeispiels entfallen.

Auf diese Weise wird die Steuerung der Reduktion der Schwingneigung (Ringing Suppression) hier nicht von der Sende-/Empfangseinrichtung 1200 gesteuert, sondern von der Kommunikationssteuereinrichtung 110. Hierbei kann die Kommunikationssteuereinrichtung 110, genauer gesagt ihr Steuerblock 116, die Schwingungsreduktionseinheit 1500 an die speziellen Eigenschaften der Teilnehmerstation 100 und des Netzwerks bzw. des Busses 40 anpassen. In anderen Worten, die Kommunikationssteuereinrichtung 110, genauer gesagt ihr Steuerblock 116, kann die Schwingungsreduktionseinheit 1500 Knoten- und Netzwerk-Sensitiv einstellen. Der Steuerblock 116 bietet damit eine Lernfunktion für die Teilnehmerstation 100.

Damit kann ebenso eine deutliche Reduktion der Schwingneigung bei dem Zustandswechsel vom zweiten Buszustand 402 zum ersten Buszustand 401 realisiert werden. Zudem kann dadurch ein deutlicher Gewinn für das Bussystem 1 als Gesamtsystem erreicht werden.

Alle zuvor beschriebenen Ausgestaltungen der Schwingungsreduktionseinheiten 15, 150, 1500 der Sende-/Empfangseinrichtungen 12, 120, 1200, der Teilnehmerstationen 10, 20, 30, 100, des Bussystems 1 und des darin ausgeführten Verfahrens gemäß den Ausführungsbeispielen und deren Modifikationen können einzeln oder in allen möglichen Kombinationen Verwendung finden. Zusätzlich sind insbesondere folgende Modifikationen denkbar.

Das zuvor beschriebene Bussystem 1 gemäß den Ausführungsbeispielen und/oder deren Modifikationen ist anhand eines auf dem CAN-Protokoll basierenden Bussystems beschrieben. Das Bussystem 1 gemäß den Ausführungsbeispielen und/oder deren Modifikationen kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30, 100 auf die Busleitung 40 oder einen gemeinsamen Kanal der Busleitung 40 gewährleistet ist.

Das Bussystem 1 gemäß den Ausführungsbeispielen und/oder deren Modifikationen ist insbesondere ein CAN-Netzwerk oder ein CAN-HS-Netzwerk oder ein CAN FD-Netzwerk oder ein FlexRay-Netzwerk. Das Bussystem 1 kann jedoch auch ein anderes serielles Kommunikationssetzwerk sein.

Insbesondere kann die Schwingungsreduktionseinheit 15, 150 bei LVDS (Low Voltage Differential Signaling) eingesetzt werden, der ein Schnittstellen-Standard für eine Hochgeschwindigkeits-Datenübertragung ist, bei welcher ein Sender und ein Empfänger über eine Datenübertragungsstrecke miteinander verbunden sind. LVDS ist standardisiert nach ANSI/TIA/EIA-644-1995.

Die Anzahl und Anordnung der Teilnehmerstationen 10, 20, 30, 100 in dem Bussystem 1 gemäß den Ausführungsbeispielen und/oder deren Modifikationen ist beliebig. Insbesondere können auch nur Teilnehmerstationen 10 oder Teilnehmerstationen 30 oder Teilnehmerstationen 100 in den Bussystemen 1 der Ausführungsbeispiele und/oder deren Modifikationen vorhanden sein.

Die Funktionalität der zuvor beschriebenen Ausführungsbeispiele und/oder deren Modifikationen lässt sich jeweils in einem Transceiver bzw. einer Sende-/Empfangseinrichtung 12 bzw. Transceiver oder einem CAN-Transceiver oder einem Transceiver-Chipsatz oder einem CAN-Transceiver-Chipsatz, usw. umsetzen. Zusätzlich oder alternativ kann es in existierende Produkte integriert werden. Insbesondere ist es möglich, dass die betrachtete Funktionalität entweder im Transceiver als separater elektronischer Baustein (Chip) realisiert oder in einer integrierten Gesamtlösung, bei welchem nur ein elektronischer Baustein (Chip) vorhanden ist, eingebettet ist.

## Patentansprüche

1. Sende-/Empfangseinrichtung (12; 120; 1200) für ein Bussystem (1), mit
einem Sender (121) zum Senden eines Sendesignals (TxD) an eine erste Busader (41) eines Busses (40) des Bussystems (1), bei welchem Bussystem (1) zumindest zeitweise ein exklusiver, kollisionsfreier Zugriff einer Teilnehmerstation (10, 20, 30, 100) auf den Bus (40) des Bussystems (1) gewährleistet ist, und zum Senden des Sendesignals (TxD) an eine zweite Busader (42) des Busses (40), und
einer Schwingungsreduktionseinheit (15; 150) zur Dämpfung einer Schwingung des sich auf den Busadern (41, 42) einstellenden Bussignals (CAN_H, CAN_L) bei Übergang des Sendesignals (TxD) von einem dominanten Buszustand (402) zu einem rezessiven Buszustand (401),
wobei die Schwingungsreduktionseinheit (15; 150) eine Reihenschaltung aus einem ersten Kondensator (151) und einem ersten Widerstand (152) aufweist, die zwischen die erste Busader (41) und einen Anschluss (44) für Masse schaltbar sind, und/oder
wobei die Schwingungsreduktionseinheit (15; 150) eine Reihenschaltung aus einem zweiten Kondensator (153) und einem zweiten Widerstand (154) aufweist, die zwischen die zweite Busader (42) und einen Anschluss (44) für Masse schaltbar sind,
wobei der erste und zweite Kondensator (151, 152) jeweils einen Wert von etwa 50 pF aufweisen, und
wobei der erste und zweite Widerstand (152, 154) jeweils einen Wert von etwa 300 Ω aufweisen oder
wobei die Sende-/Empfangseinrichtung (12; 120) zum Senden und Empfangen von Nachrichten (45, 47) nach dem CAN FD Protokoll ausgestaltet sind, und wobei der erste und zweite Kondensator (151, 152) jeweils einen Wert von etwa 50 pF aufweisen, und
wobei der erste und zweite Widerstand (152, 154) jeweils einen Wert von etwa 300 Ω aufweisen.

2. Sende-/Empfangseinrichtung (12; 120; 1200) nach Anspruch 1,
wobei die Schwingungsreduktionseinheit (15; 150) zwischen einen Treiber (1211), der das Sendesignal (TxD) zu der ersten Busader (41) treibt, und einen Anschluss für die erste Busader (41) angeschlossen ist, und
wobei die Schwingungsreduktionseinheit (15; 150) zwischen einen Treiber (1211), der das Sendesignal (TxD) zu der zweiten Busader (42) treibt, und einen Anschluss für die zweite Busader (42) angeschlossen ist.

3. Sende-/Empfangseinrichtung (12; 120; 1200) nach Anspruch 1 oder 2,
wobei der Empfänger (122) der Sende-/Empfangseinrichtung (120) oder die Schwingungsreduktionseinheit (150) zudem einen Kommunikationsphasen-Erfassungsblock (1224) zum Erfassen von unterschiedlichen Phasen einer Kommunikation auf dem Bus (40) aufweist.

4. Sende-/Empfangseinrichtung (120) nach Anspruch 3,
wobei die Schwingungsreduktionseinheit (150) mindestens eine Schalteinrichtung (155, 156) aufweist, welche ausgestaltet ist, die Reihenschaltung in Abhängigkeit von dem Erfassungsergebnis des Kommunikationsphasen-Erfassungsblocks (1224) mit der entsprechenden ersten und/oder zweiten Busader (41, 42) zu verbinden.

5. Sende-/Empfangseinrichtung (12; 120) nach Anspruch 4, wobei der Kommunikationsphasen-Erfassungsblock (1224) ausgestaltet ist, mindestens ein Endebit (454) zu erfassen, welches das Ende einer Nachricht (45; 47) anzeigt, um die unterschiedlichen Phasen einer Kommunikation auf dem Bus (40) zu erfassen.

6. Sende-/Empfangseinrichtung (12; 120) nach Anspruch 4 oder 5, wobei die Schwingungsreduktionseinheit (150) ausgestaltet ist, die mindestens eine Schalteinrichtung (155, 156) nach Abschluss einer Arbitrationsphase (451; 453) der Kommunikation mit der ersten und/oder zweiten Busader (41, 42) zu verbinden.

7. Sende-/Empfangseinrichtung (120) nach einem der vorangehenden Ansprüche,
wobei ein Empfänger (122) der Sende-/Empfangseinrichtung (120) oder die Schwingungsreduktionseinheit (150) zudem einen Phasenlage-Erfassungsblock (1225) aufweist zum Erfassen der zeitlichen Lage der Signale auf den Busadern (41, 42) des Busses (40) zueinander, und/oder
wobei die Schwingungsreduktionseinheit (150) mindestens eine Schalteinrichtung (155, 156) aufweist, welche ausgestaltet ist, die Reihenschaltung in Abhängigkeit von dem Erfassungsergebnis des Phasenlage-Erfassungsblocks (1225) mit der entsprechenden ersten und/oder zweiten Busader (41, 42) zu verbinden.

8. Sende-/Empfangseinrichtung (12; 120) nach einem der vorangehenden Ansprüche, wobei die Schwingungsreduktionseinheit (15; 150) derart ausgestaltet ist, dass die Schwingungsreduktionseinheit (15; 150) nur aktiviert ist, wenn der Sender (121) eine Nachricht (45; 47) auf den Bus (40) sendet.

9. Bussystem (1), mit
einem Bus (40), und
mindestens zwei Teilnehmerstationen (10; 20; 30; 100), welche über den Bus (40) derart miteinander verbunden sind, dass sie miteinander kommunizieren können,
wobei mindestens eine der mindestens zwei Teilnehmerstationen (10; 20; 30) eine Sende-/Empfangseinrichtung (12; 120; 1200) nach einem der vorangehenden Ansprüche aufweist.

10. Bussystem (1) nach Anspruch 9, wobei eine der mindestens zwei Teilnehmerstationen (100) eine Kommunikationssteuereinrichtung (110) aufweist, welche ausgestaltet ist, ein Signal (TxD) an die Sende-/Empfangseinrichtung (1200) zu senden, welches die Sende-/Empfangseinrichtung (1200) als Grundlage für die Signale (CAN_H, CAN_L) für die Busadern (41, 42) verwendet, und das Signal (TxD) mit einem von der Sende-/Empfangseinrichtung (1200) vom Bus (40) empfangenen Signal (RxD) zur Erzeugung eines Steuersignals zu vergleichen, und wobei die Kommunikationssteuereinrichtung (110) ausgestaltet ist, das Steuersignal zur Steuerung der Schwingungsreduktionseinheit (1500) an die Sende-/Empfangseinrichtung (1200) auszugeben.

11. Verfahren zur Reduzierung einer Schwingneigung beim Übergang zwischen unterschiedlichen Bitzuständen, wobei das Verfahren mit einer Sende-/Empfangseinrichtung (12; 120; 1200) für ein Bussystem (1) ausgeführt wird, bei welchem zumindest zeitweise ein exklusiver, kollisionsfreier Zugriff einer Teilnehmerstation (10, 20, 30, 100) auf einen Bus (40) des Bussystems (1) gewährleistet ist, wobei das Verfahren die Schritte aufweist,
Senden, mit einem Sender (121) der Sende-/Empfangseinrichtung (12; 120; 1200), eines Sendesignals (TxD) an eine erste Busader (41) eines Busses (40) des Bussystems (1), bei welchem Bussystem (1) zumindest zeitweise ein exklusiver, kollisionsfreier Zugriff einer Teilnehmerstation (10, 20, 30) auf den Bus (40) des Bussystems (1) gewährleistet ist,
Senden, mit dem Sender (121) der Sende-/Empfangseinrichtung (12; 120; 1200), des Sendesignals (TxD) an eine zweite Busader (42) des Busses (40), und
Dämpfen, mit einer Schwingungsreduktionseinheit (15; 150), einer Schwingung des sich auf den Busadern (41, 42) einstellenden Bussignals (CAN_H, CAN_L) bei Übergang des Sendesignals (TxD) von einem dominanten Buszustand (402) zu einem rezessiven Buszustand (401), indem bei der Schwingungsreduktionseinheit (15; 150) eine Reihenschaltung aus einem ersten Kondensator (151) und einem ersten Widerstand (152) zwischen die erste Busader (41) und einen Anschluss (44) für Masse geschaltet ist, und/oder indem bei der Schwingungsreduktionseinheit (15; 150) eine Reihenschaltung aus einem zweiten Kondensator (153) und einem zweiten Widerstand (154) zwischen die zweite Busader (42) und einen Anschluss (44) für Masse geschaltet ist,
wobei der erste und zweite Kondensator (151, 152) jeweils einen Wert von etwa 50 pF aufweisen, und
wobei der erste und zweite Widerstand (152, 154) jeweils einen Wert von etwa 300 Ω aufweisen.

## Claims

1. Transmission/reception device (12; 120; 1200) for a bus system (1), having
a transmitter (121) for transmitting a transmission signal (TxD) to a first bus wire (41) of a bus (40) of the bus system (1), which bus system (1) exhibits at least intermittently ensured exclusive collision-free access by a subscriber station (10, 20, 30, 100) to the bus (40) of the bus system (1), and for transmitting the transmission signal (TxD) to a second bus wire (42) of the bus (40), and
an oscillation reduction unit (15; 150) for damping an oscillation of the bus signal (CAN_H, CAN L) appearing on the bus wires (41, 42) when the transmission signal (TxD) transitions from a dominant bus state (402) to a recessive bus state (401),
wherein the oscillation reduction unit (15; 150) comprises a series connection comprising a first capacitor (151) and a first resistor (152), which are connectable between the first bus wire (41) and a connection (44) for earth, and/or
wherein the oscillation reduction unit (15; 150) comprises a series connection comprising a second capacitor (153) and a second resistor (154), which are connectable between the second bus wire (42) and a connection (44) for earth,
wherein the first and second capacitors (151, 152) each have a value of approximately 50 pF, and
wherein the first and second resistors (152, 154) each have a value of approximately 300 Ω or
wherein the transmission/reception device (12; 120) is designed to transmit and receive messages (45, 47) using the CAN FD protocol, and wherein the first and second capacitors (151, 152) each have a value of approximately 50 pF, and
wherein the first and second resistors (152, 154) each have a value of approximately 300 Ω.

2. Transmission/reception device (12; 120; 1200) according to Claim 1,
wherein the oscillation reduction unit (15; 150) is connected between a driver (1211) that drives the transmission signal (TxD) for the first bus wire (41) and a connection for the first bus wire (41), and wherein the oscillation reduction unit (15; 150) is connected between a driver (1211) that drives the transmission signal (TxD) for the second bus wire (42) and a connection for the second bus wire (42).

3. Transmission/reception device (12; 120; 1200) according to Claim 1 or 2,
wherein the receiver (122) of the transmission/reception device (120) or the oscillation reduction unit (150) also comprises a communication phase detection block (1224) for detecting different phases of a communication on the bus (40).

4. Transmission/reception device (120) according to Claim 3,
wherein the oscillation reduction unit (150) comprises at least one switching device (155, 156) configured to connect the series connection to the applicable first and/or second bus wire (41, 42) on the basis of the detection result of the communication phase detection block (1224).

5. Transmission/reception device (12; 120) according to Claim 4, wherein the communication phase detection block (1224) is configured to detect at least one end bit (454) indicating the end of a message (45; 47) in order to detect the different phases of a communication on the bus (40).

6. Transmission/reception device (12; 120) according to Claim 4 or 5, wherein the oscillation reduction unit (150) is configured to connect the at least one switching device (155, 156) to the first and/or second bus wire (41, 42) following the conclusion of an arbitration phase (451; 453) of the communication.

7. Transmission/reception device (120) according to one of the preceding claims,
wherein a receiver (122) of the transmission/reception device (120) or the oscillation reduction unit (150) also comprises a phase angle detection block (1225) for detecting the temporal position of the signals on the bus wires (41, 42) of the bus (40) in relation to one another, and/or
wherein the oscillation reduction unit (150) comprises at least one switching device (155, 156) configured to connect the series connection to the applicable first and/or second bus wire (41, 42) on the basis of the detection result of the phase angle detection block (1225).

8. Transmission/reception device (12; 120) according to one of the preceding claims, wherein the oscillation reduction unit (15; 150) is configured such that the oscillation reduction unit (15; 150) is activated only if the transmitter (121) transmits a message (45; 47) to the bus (40).

9. Bus system (1), having
a bus (40), and
at least two subscriber stations (10; 20; 30; 100), which are connected to one another via the bus (40) such that they can communicate with one another, wherein at least one of the at least two subscriber stations (10; 20; 30) comprises a transmission/reception device (12; 120; 1200) according to one of the preceding claims.

10. Bus system (1) according to Claim 9, wherein one of the at least two subscriber stations (100) has a communication control device (110) configured to transmit a signal (TxD) to the transmission/reception device (1200), which signal is used by the transmission/reception device (1200) as a basis for the signals (CAN_H, CAN_L) for the bus wires (41, 42), and to compare the signal (TxD) with a signal (RxD) received from the transmission/reception device (1200) by the bus (40), in order to generate a control signal, and wherein the communication control device (110) is configured to output the control signal to the transmission/reception device (1200) in order to control the oscillation reduction unit (1500).

11. Method for reducing an inclination toward oscillation when transitioning between different bit states, the method being carried out using a transmission/reception device (12; 120; 1200) for a bus system (1), which bus system (1) exhibits at least intermittently ensured exclusive collision-free access by a subscriber station (10, 20, 30, 100) to a bus (40) of the bus system (1), wherein the method has the steps of
transmitting, using a transmitter (121) of the transmission/reception device (12; 120; 1200), a transmission signal (TxD) to a first bus wire (41) of a bus (40) of the bus system (1), which bus system (1) exhibits at least intermittently ensured exclusive collision-free access by a subscriber station (10, 20, 30) to the bus (40) of the bus system (1), transmitting, using the transmitter (121) of the transmission/reception device (12; 120; 1200), the transmission signal (TxD) to a second bus wire (42) of the bus (40), and
damping, using an oscillation reduction unit (15; 150), an oscillation of the bus signal (CAN_H, CAN_L) appearing on the bus wires (41, 42) when the transmission signal (TxD) transitions from a dominant bus state (402) to a recessive bus state (401), by virtue of the oscillation reduction unit (15; 150) having a series connection comprising a first capacitor (151) and a first resistor (152) connected between the first bus wire (41) and a connection (44) for earth, and/or by virtue of the oscillation reduction unit (15; 150) having a series connection comprising a second capacitor (153) and a second resistor (154) connected between the second bus wire (42) and a connection (44) for earth,
wherein the first and second capacitors (151, 152) each have a value of approximately 50 pF, and
wherein the first and second resistors (152, 154) each have a value of approximately 300 Ω.

## Revendications

1. Dispositif d'émission/réception (12 ; 120 ; 1200) pour un système de bus (1), comprenant
un émetteur (121) servant à émettre un signal d'émission (TxD) à un premier brin de bus (41) d'un bus (40) du système de bus (1), dans lequel système de bus (1) un accès sans collision, au moins temporairement exclusif, d'une station d'abonné (10, 20, 30, 100) au bus (40) du système de bus (1) est assuré, et servant à émettre le signal d'émission (TxD) à un deuxième brin de bus (42) du bus (40), et
une unité de réduction d'oscillation (15 ; 150) servant à atténuer une oscillation du signal de bus (CAN_H, CAN_L) apparaissant sur les brins de bus (41, 42) à la transition du signal d'émission (TxD) d'un état de bus dominant (402) à un état de bus récessif (401),
l'unité de réduction d'oscillation (15 ; 150) présentant un couplage en série composé d'un premier condensateur (151) et d'une première résistance (152) qui peuvent être couplés entre le premier brin de bus (41) et une borne (44) de masse, et/ou
l'unité de réduction d'oscillation (15 ; 150) présentant un couplage en série composé d'un deuxième condensateur (153) et d'une deuxième résistance (154) qui peuvent être couplés entre le premier brin de bus (42) et une borne (44) de masse,
le premier et le deuxième condensateur (151, 152) présentant respectivement une valeur d'environ 50 pF, et
la première et la deuxième résistance (152, 154) présentant respectivement une valeur d'environ 300 Ω, ou
le dispositif d'émission/réception (12 ; 120) étant configuré pour émettre et recevoir des messages (45, 47) selon le protocole CAN FD, et le premier et le deuxième condensateur (151, 152) présentant respectivement une valeur d'environ 50 pF, et
la première et la deuxième résistance (152, 154) présentant respectivement une valeur d'environ 300 Ω.

2. Dispositif d'émission/réception (12 ; 120 ; 1200) selon la revendication 1,
dans lequel l'unité de réduction d'oscillation (15; 150) est connectée entre un circuit d'attaque (1211), qui envoie le signal d'émission (TxD) au premier brin de bus (41), et une borne pour le premier brin de bus (41), et
dans lequel l'unité de réduction d'oscillation (15; 150) est connectée entre un circuit d'attaque (1211), qui envoie le signal d'émission (TxD) au deuxième brin de bus (42), et une borne pour le deuxième brin de bus (42).

3. Dispositif d'émission/réception (12 ; 120 ; 1200) selon la revendication 1 ou 2, dans lequel le récepteur (122) du dispositif d'émission/réception (120) ou l'unité de réduction d'oscillation (150) présente en outre un bloc de détection de phase de communication (1224) pour détecter différentes phases d'une communication sur le bus (40).

4. Dispositif d'émission/réception (120) selon la revendication 3, dans lequel l'unité de réduction d'oscillation (150) présente au moins un dispositif de commutation (155, 156) qui est configuré pour relier le couplage en série au premier et/ou au deuxième brin de bus (41, 42) correspondant en fonction du résultat de détection du bloc de détection de phase de communication (1224).

5. Dispositif d'émission/réception (12; 120) selon la revendication 4, dans lequel le bloc de détection de phase de communication (1224) est configuré pour détecter au moins un bit de fin (454) qui indique la fin d'un message (45; 47) afin de détecter les différentes phases d'une communication sur le bus (40).

6. Dispositif d'émission/réception (12; 120) selon la revendication 4 ou 5, dans lequel l'unité de réduction d'oscillation (150) est configurée pour relier ledit au moins un dispositif de commutation (155, 156) au premier et/ou au deuxième brin de bus (41, 42) après l'achèvement d'une phase d'arbitrage (451 ; 453) de la communication.

7. Dispositif d'émission/réception (120) selon l'une quelconque des revendications précédentes,
dans lequel un récepteur (122) du dispositif d'émission/réception (120) ou l'unité de réduction d'oscillation (150) présente en outre un bloc de détection de position de phase (1225) servant à détecter la position dans le temps des signaux sur les brins de bus (41, 42) du bus (40) les uns par rapport aux autres, et/ou
dans lequel l'unité de réduction d'oscillation (150) présente au moins un dispositif de commutation (155, 156) qui est configuré pour relier le couplage en série au premier et/ou au deuxième brin de bus (41, 42) correspondant en fonction du résultat de détection du bloc de détection de position de phase (1225).

8. Dispositif d'émission/réception (12; 120) selon l'une quelconque des revendications précédentes, dans lequel l'unité de réduction d'oscillation (15; 150) est configurée de telle sorte que l'unité de réduction d'oscillation (15; 150) n'est activée que si l'émetteur (121) émet un message (45 ; 47) sur le bus (40) .

9. Système de bus (1), comprenant
un bus (40), et
au moins deux stations d'abonné (10; 20 ; 30 ; 100) qui sont reliées l'une à l'autre par le bus (40) de telle sorte qu'elles peuvent communiquer entre elles,
au moins l'une des au moins deux stations d'abonné (10 ; 20 ; 30) présentant un dispositif d'émission/réception (12; 120 ; 1200) selon l'une quelconque des revendications précédentes.

10. Système de bus (1) selon la revendication 9, dans lequel l'une des au moins deux stations d'abonné (100) présente un dispositif de commande de communication (110) qui est configuré pour émettre un signal (TxD) au dispositif d'émission/réception (1200) qui utilise le dispositif d'émission/réception (1200) comme base pour les signaux (CAN_H, CAN L) destinés aux brins de bus (41, 42), et pour comparer le signal (TxD) avec un signal (RxD) reçu par le dispositif d'émission/réception (1200) de la part du bus (40) pour générer un signal de commande, et le dispositif de commande de communication (110) étant configuré pour délivrer au dispositif d'émission/réception (1200) le signal de commande servant à commander l'unité de réduction d'oscillation (1500).

11. Procédé permettant de réduire une tendance aux oscillations à la transition entre deux états binaires différents, le procédé étant exécuté par un dispositif d'émission/réception (12 ; 120 ; 1200) pour un système de bus (1) dans lequel un accès sans collision, au moins temporairement exclusif, d'une station d'abonné (10, 20, 30, 100) à un bus (40) du système de bus (1) est assuré, le procédé présentant les étapes consistant à
émettre, par un émetteur (121) du dispositif d'émission/réception (12; 120; 1200), un signal d'émission (TxD) à un premier brin de bus (41) d'un bus (40) du système de bus (1), dans lequel système de bus (1) un accès sans collision, au moins temporairement exclusif, d'une station d'abonné (10, 20, 30) au bus (40) du système de bus (1) est assuré,
émettre, par l'émetteur (121) du dispositif d'émission/réception (12; 120 ; 1200), le signal d'émission (TxD) à un deuxième brin de bus (42) du bus (40), et
atténuer, par une unité de réduction d'oscillation (15 ; 150), une oscillation du signal de bus (CAN_H, CAN_L) apparaissant sur les brins de bus (41, 42) à la transition du signal d'émission (TxD) d'un état de bus dominant (402) à un état de bus récessif (401) en ce que sur l'unité de réduction d'oscillation (15 ; 150), un couplage en série composé d'un premier condensateur (151) et d'une première résistance (152) est couplé entre le premier brin de bus (41) et une borne (44) de masse, et/ou en ce que sur l'unité de réduction d'oscillation (15 ; 150), un couplage en série composé d'un deuxième condensateur (153) et d'une deuxième résistance (154) est couplé entre le deuxième brin de bus (42) et une borne (44) de masse,
le premier et le deuxième condensateur (151, 152) présentant respectivement une valeur d'environ 50 pF, et
la première et la deuxième résistance (152, 154) présentant respectivement une valeur d'environ 300 Ω.
